# EUROPÄISCHE PATENTSCHRIFT

(11) **EP 2 251 174 B1**
(45) Veröffentlichungstag und Bekanntmachung des Hinweises auf die Patenterteilung: **26.09.2012**
(21) Anmeldenummer: 10004554.1
(22) Anmeldetag: 30.04.2010
(51) Int. Cl.: B29C 45/14, B60J 7/00, F16C 11/04

(54) **Drehgelenkanordnung mit einem mittels Spritzguss gefertigten Gelenkbolzen**
Swivel joint assembly with a joint bolt produced by means of injection moulding
Agencement d'articulation rotative doté d'un boulon fabriqué à l'aide d'un moulage par injection

(30) Priorität: 13.05.2009 DE 102009021151
(43) Veröffentlichungstag der Anmeldung: 17.11.2010
(73) Patentinhaber: TB&C Outsert Center GmbH, 35745 Herborn (DE)
(72) Erfinder: Fallenbeck, Wolfgang, 35457 Lollar (DE); Wetzels, Ralf, 42499 Hückeswagen (DE)
(74) Vertreter: Weilnau, Carsten

(56) Entgegenhaltungen:
- EP-A2- 0 303 786
- DE-A1- 4 227 452

## Beschreibung

### Beschreibung

Die vorliegende Erfindung betrifft eine Drehgelenkanordnung mit einem Basisteil und einem schwenkbar daran gelagerten Schwenkteil, insbesondere zur schwenkbaren Lagerung und Verbindung von Kraftfahrzeugbauteilen, insbesondere von beweglichen Karosserieteilen, wie etwa einem Cabriolet-Verdeck. Die Erfindung betrifft auch ein Verfahren zur Herstellung einer solchen Drehgelenkanordnung.

### Stand der Technik

Ein Cabriolet-Verdeck eines Cabriolet-Fahrzeuges ist typischerweise zwischen einer ausgeklappten und den Fahrzeuginnenraum überspannenden Stellung und einer kompakten Ablagestellung überführbar, in welcher das Verdeckgestänge einen möglichst minimalen Platzbedarf aufweist.

Ein solches Cabriolet-Verdeck ist beispielsweise in der DE 10 2007 029 813 A1 beschrieben. Das Verdeck weist ein vorderes Verdeckteil auf, welcher gelenkig an weiteren seitlichen Gestängeteilen angebunden ist. Ein derartiges Gestänge weist eine Vielzahl einzelner Gelenke und Gelenkachsen auf. Die Gelenkbauteile sind dabei überwiegend aus Metall gefertigt, um den im bestimmungsgemäßen Gebrauch auftretenden mechanischen Belastungen standhalten zu können.

Montage- und fertigungstechnisch gestalten sich diese, oftmals mehrere Gelenkbauteile umfassenden Gelenkanordnungen als relativ aufwendig und kostenintensiv. Zwischen den schwenkbar zueinander gelagerten Gelenkbauteilen müssen geeignete Abstands- oder Gleitelemente, wie Abstandshülsen oder Scheiben eingesetzt werden, bevor die Bauteile selbst durch Bildung einer Nietverbindung schwenkbar miteinander verbunden werden. Ein weiteres Beispiel für eine Drehgelenkanordnung ist in der EP 0 303 786 A zufinden.

Der Erfindung liegt demgegenüber die Aufgabe zugrunde, eine Drehgelenkanordnung und ein entsprechendes Verfahren zu seiner Herstellung zur Verfügung zu stellen, die mit einem geringerem Montage- und Fertigungsaufwand herstellbar ist. Die erfindungsgemäße Drehgelenkanordnung soll sich zudem durch geringere Fertigungs- und Montagekosten und durch eine wartungs- und verschleißarme Funktion auszeichnen. Ferner hat die Erfindung eine Gewichtsreduzierung einer Drehgelenkanordnung zum Ziel.

Die der Erfindung zugrundeliegende Aufgabe wird mittels einer Drehgelenkanordnung gemäß dem unabhängigen Patentanspruch 1 sowie mittels eines Verfahrens zu seiner Herstellung gemäß Patentanspruch 12 gelöst. Einzelne vorteilhafte Ausgestaltungen der Erfindung sind in den jeweiligen abhängigen Patentansprüchen angegeben.

Die erfindungsgemäße Drehgelenkanordnung weist ein Basisteil und ein Schwenkteil auf, wobei Basisteil und Schwenkteil zueinander schwenkbar gelagert sind. Sowohl das Basisteil als auch das Schwenkteil weisen eine Durchgangsöffnung auf, in welcher ein mittels Spritzguss gefertigter Gelenkbolzen angeordnet ist. Die am Basisteil und am Schwenkteil vorgesehenen Durchgangsöffnungen sind zumindest bereichsweise überlappend zueinander angeordnet und sind ferner dazu ausgebildet, den vorzugsweise aus Kunststoff ausgebildeten Gelenkbolzen zumindest bereichsweise aufzunehmen. Zumindest eine, vorzugsweise beide Durchgangsöffnungen können dabei vom Gelenkbolzen vollständig durchsetzt sein. Der Gelenkbolzen erstreckt sich typischerweise senkrecht zur Längserstreckung von Basisteil und Schwenkteil oder senkrecht, bzw. schräg zur Ebene von Basisteil und/oder Schwenkteil. Der Gelenkbolzen ist ferner an zumindest einem der Gelenkbauteile, Basisteil oder Schwenkteil befestigt und fest, bzw. unlösbar mit diesem verbunden.

Durch die Ausgestaltung des eine Schwenkachse zur Verfügung stellenden oder eine Schwenk- oder Drehachse bildenden Gelenkbolzens können der Fertigungsprozess und die Montage des Drehgelenks vereinfacht werden. Auch kann durch die Substitution eines bisher üblichen Metallbolzens durch ein Kunststoffbauteil das Gesamtgewicht des Drehgelenks verringert werden. Ferner weist das für den Gelenkbolzen bevorzugt vorgesehene Kunststoffmaterial eine für den Einsatz als Drehgelenk vorteilhafte Materialbeschaffenheit auf.

Die hierdurch bedingten Haft- und Gleitreibungskoeffizienten an den Grenzflächen von Gelenkbolzen und dem vorzugsweise aus Metall gefertigten Basisteil und/oder Schwenkteil erlauben ein definiertes Verschwenken von Basisteil und Schwenkteil zueinander und ermöglichen eine besonders wartungsarme Funktion der Drehgelenkanordnung im Langzeitbetrieb. Die erfindungsgemäße Drehgelenkanordnung kann durch die Verbindung von Kunststoff- und Metallkomponenten als Outsert-Teil ausgebildet werden.

Durch die Verwendung eines Kunststoffgelenkbolzens kann auch in vorteilhafter Weise auf die bislang teils notwendige Verwendung etwaiger Schmierstoffe weitgehend verzichtet werden. Ein Kunststoffgelenkbolzen wirkt ferner den negativen Auswirkungen von durch Korrosion bedingten Alterungserscheinung, etwa einer durch Rostbildung hervorgerufenen Schwergängigkeit des Drehgelenks entgegen.

Die erfindungsgemäße Drehgelenkanordnung ist dabei keinesfalls auf die drehbare Lagerung und Befestigung von Karosseriebauteilen beschränkt sondern kann auf eine Vielzahl unterschiedlich ausgebildeter Drehgelenkanordnungen in grundverschiedenen Bereichen der Technik Verwendung finden. Auch können für den Gelenkbolzen sogenannte gleitmodifizierte Kunststoffe Verwendung finden. Unter gleitmodifizierten Kunststoffen versteht man dabei solche Kunststoffe, die Gleitmittel, d. h. Zusätze zur Verbesserung der Gleit-und Trockenlaufeigenschaften enthalten. Geeignete Zusätze sind für sämtliche kommerziell gehandelten Kunststoffe allgemein bekannt.

Neben einer Ausgestaltung des Gelenkbolzens als Kunststoff-Spritzgussbauteil kann für die Erfindung gleichermaßen auch ein mittels Metall-Spritzgussverfahren gefertigter Gelenkbolzen aus Metall vorgesehen werden. Im Zuge eines Metallspritzgussverfahrens wird ein Metallpulver mit einem geeigneten Binder vermischt und in fließfähigem Zustand in eine Spritzgussform gespritzt. Hiernach kann der Binders entweichen und das gespritzten Bauteil kann Gegenstand eines Sinterprozesses sein.

Es ist vorgesehen, dass der Gelenkbolzen an das Basisteil und/oder an das Schwenkteil angespritzt ist. Das heißt, die Anbindung des Gelenkbolzens an zumindest eines der beiden Gelenkbauteile, Basisteil oder Schwenkteil erfolgt im Zuge des für die Fertigung des Gelenkbolzens vorgesehenen Spritzgussprozesses. Insoweit entfällt eine gesonderte Montage des vorzugsweise aus Kunststoff ausgebildeten Gelenkbolzens an zumindest einem der beiden Gelenkbauteile.

Dabei kann ferner vorgesehen sein, den bevorzugt aus Kunststoff ausgebildeten Gelenkbolzen nicht nur an eines der beiden Gelenkteile, sondern an beide Gelenkteile, das Basisteil und das Schwenkteil in demselben oder in aufeinanderfolgenden Spritzgussprozessen anzuspritzen. Auf diese Art und Weise kann die gesamte Fertigung und Montage des Gelenkbauteils in einen ein- oder mehrkomponentigen Spritzgussprozess integriert werden. Die Bildung des Gelenkbolzens und dessen teils schwenkbare Befestigung Fertigstellung an zumindest einem Gelenkbauteil kann somit vollständig im Spritzgussprozess erfolgen.

Insbesondere bei einer Ausgestaltung als Kunststoff-Spritzgussbauteil kann der Bolzen auch in einem Zug an beide Gelenkteile angespritzt werden. Durch eine dem Kunststoffspritzgussprozess inhärente Schrumpfung kommt es nach erfolgtem Ausspritzen von in den Gelenkbauteilen vorgesehenen Durchgangsöffnungen zu einer zumindest geringfügigen Verkleinerung des vom Spritzgussmaterial ausgefüllten Volumens. Im Endeffekt kann somit ein Gelenkbolzen an eine Durchgangsöffnung eines der, vorzugsweise aus einem anderen Material, insbesondere einem Metall gefertigten, Gelenkbauteile fest angespritzt werden. Durch den nachfolgenden Schrumpfungsprozess des die Öffnung des Gelenkbauteils durchsetzenden oder darin zu liegen kommenden Gelenkbolzens entsteht an der Grenzfläche zwischen dem Gelenkbauteil und dem Gelenkbolzen zumindest ein geringes Spiel, welches zu einer bestimmungsgemäßen Beweglichkeit, insbesondere einer Drehbarkeit des Bolzens gegenüber dem Gelenkbauteil führen kann.

Nach einer weiteren Ausgestaltung der Erfindung ist vorgesehen, dass der Gelenkbolzen das Basisteil und das Schwenkteil formschlüssig und/oder stoffschlüssig miteinander verbindet. Dabei ist insbesondere vorgesehen, dass der Gelenkbolzen selbst formschlüssig oder stoffschlüssig an einem bzw. an beiden Gelenkbauteilen befestigt ist und so eine schwenkbare Verbindung von Basisteil und Schwenkteil zur Verfügung stellt. Beispielsweise kann vorgesehen sein, dass der Gelenkbolzen formschlüssig an das Basisteil angespritzt ist und mit einem zylindrischen Fortsatz eine Schwenkachse für das Schwenkteil bildet. Dabei ist insbesondere eine formschlüssige Verbindung von Gelenkbolzen und Schwenkteil zumindest in Axialrichtung, das heißt in Bolzenlängsrichtung, vorgesehen.

Nach einer bevorzugten Ausgestaltung ist dabei ferner vorgesehen, dass der Gelenkbolzen einen vom Rand der Durchgangsöffnung von Basisteil und/oder Schwenkteil axial hervorstehenden und gegenüber der Durchgangsöffnung radial verbreiterten Kopf aufweist. Dieser verbreiterte Kopf bewirkt eine axiale Fixierung des Gelenkbolzens gegenüber dem Basisteil und/oder dem Schwenkteil. Dadurch, dass der Gelenkbolzen zumindest eine am Basisteil und/oder Schwenkteil vorgesehene Durchgangsöffnung durchsetzt, ist der Gelenkbolzen senkrecht zu seiner Axialerstreckung gegenüber dem entsprechenden Gelenkbauteil räumlich fixiert.

Nach einer Weiterbildung der Erfindung ist vorgesehen, dass ein zwischen dem Basisteil und dem Schwenkteil angeordnetes Distanzstück einstückig mit dem Gelenkbolzen verbunden oder daran angeformt ist. Das Distanzstück wird vorzugsweise im Zuge des Spritzgussprozesses erzeugt, indem ein zwischen Basisteil und Schwenkteil befindlicher Zwischenraum beim Spritzgussprozess mit dem für den Bolzen vorgesehenen Material, insbesondere Kunststoff ausgespitzt wird. Durch die Bildung des in den Zwischenraum zwischen Basisteil und Schwenkteil eingespritzten Distanzstücks kann der axiale Abstand zwischen Basisteil und Schwenkteil variabel und den vorgegebenen Geometrieanforderungen der Gelenkanordnung entsprechend eingestellt werden. Fertigungstechnisch ist dabei lediglich dafür Sorge zu tragen, dass die in eine geeignete Spritzform eingelegten Gelenkbauteile, beim Spritzvorgang den zur Bildung des Distanzstücks vorgesehenen axialen Abstand einhalten.

Nach einer weiteren Ausgestaltung der Erfindung kann vorgesehen sein, dass das Distanzstück einen Überlappungsbereich von Basisteil und Schwenkteil zumindest nahezu vollständig ausfüllt. Hierbei weist das Distanzstück eine verhältnismäßig große Grenzfläche zum angrenzenden Gelenkbauteil auf, sodass auch etwaige, schräg zur Gelenkachse auftretenden Kräfte vom Distanzstück abgefangen und aufgenommen, bzw. in das jeweils andere Gelenkbauteil abgeleitet werden können. Die Stabilität der gesamten Drehgelenkanordnung kann auf diese Art und Weise erhöht werden.

Nach einer weiteren Ausgestaltung der Erfindung ist vorgesehen, das Distanzstück als Distanzhülse oder als Distanzscheibe auszubilden. Hierzu weist das Distanzstück typischerweise eine etwas geringere Radialerstreckung auf, sodass es den Überlappungsbereich von Basisteil und Schwenkteil nur noch bereichsweise und unmittelbar angrenzend an die fluchtend zueinander angeordneten Durchgangsöffnungen von Basisteil und Schwenkteil ausfüllt.

Nach einer weiteren vorteilhaften Ausgestaltung der Erfindung weist der Gelenkbolzen an zumindest einem freien Endabschnitt ein elastisch deformierbares Rastelement auf. Das Rastelement kann als Spreizdorn, als Rastnase oder dergleichen Rastelemente ausgebildet sein. Bei einer zylindersymmetrischen Ausgestaltung des Gelenkbolzens kann insbesondere vorgesehen sein, dass das Rastelement einen in Umfangsrichtung radial verbreiterter Rand aufweist, der in Endmontageposition etwa an der dem Basisteil abgewandten Seite des Schwenkteils, oder umgekehrt, an der dem Schwenkteil abgewandten Seite des Basisteils zur Anlage gelangt.

Dabei ist insbesondere vorgesehen, dass das Rastelement oder Halteelement zumindest eine Hinterschneidung aufweist, mit welcher es an der Außenseite von Basisteil und/oder Schwenkteil zur Anlage gelangt.

Bei einem Fertigungsverfahren, bei welchem der Gelenkbolzen an beide Gelenkbauteile, nämlich Basisteil und Schwenkteil angespritzt wird, ist eine elastische Deformierbarkeit des Gelenkbolzens grundsätzlich nicht erforderlich. Ein elastisch deformierbares Rastelement ist insbesondere dann am Gelenkbolzen vorzusehen, wenn dieser etwa nur an einem der Gelenkbauteile vorkonfigurierend angespritzt ist und das zweite Gelenkbauteil nachträglich mit dem Gelenkbolzen verbunden wird. Unter So kann das zu befestigende Gelenkbauteil in besonders einfacher Art und Weise etwa auf das Rastelement aufgeclipst werden.

Weiterhin ist für die Erfindung vorgesehen, dass das Basisteil und/oder das Gelenkteil aus Metall gefertigt sind, und dass der Gelenkbolzen ein thermoplastisches Elastomer, insbesondere Polyoxymethylen (POM) aufweist. POM zeichnet sich insbesondere durch eine ausreichend hohe Festigkeit und Steifigkeit sowie durch niedrige Reibwerte in einem weiten Temperaturbereich aus und kann den mechanischen Belastungsanforderungen, insbesondere im Bereich des Kraftfahrzeugbaus genügen.

Nach einer weiteren vorteilhaften Ausgestaltung der Erfindung ist vorgesehen, dass in den Gelenkbolzen ein Verstärkungselement eingebettet ist, welches sich schräg oder senkrecht zur Ebene des Basisteils oder des Schwenkteils erstreckt. Das Verstärkungselement ist dabei ferner am Basisteil oder am Schwenkteil befestigt. Vorzugsweise ist das Verstärkungselement aus Metall gefertigt und kann so zu einer Erhöhung der Struktursteifigkeit und mechanischen Festigkeit des Gelenkbolzens und somit der gesamten Drehgelenkanordnung beitragen.

Von Vorteil ist das Verstärkungselement als eine von einem Randabschnitt der Durchgangsöffnung von Basisteil oder Schwenkteil oder als eine von einem Seitenrand von Basisteil oder Schwenkteil erstreckende Lasche ausgebildet. Diese Lasche ist im Vergleich zur Ebene des Basisteils oder Schwenkteils umgeformt, vorzugsweise zum gegenüberliegenden Gelenkbauteil hin gerichtet, hochgebogen.

Die Ausgestaltung des Verstärkungselements als umgebogene Winkellasche ist auch fertigungstechnisch von Vorteil, indem sie einstückig mit dem Basisteil oder dem Schwenkteil verbunden ist. Des Weiteren kann dabei vorgesehen sein, die Durchgangsöffnung im Basisteil oder Schwenkteil dadurch zu bilden, indem das Basisteil oder Schwenkteil zunächst mit einem gekrümmt oder eckig verlaufendem Schlitz versehen wird und die Lasche als auch die Durchgangsöffnung durch nachträgliches Umformen insbesondere durch Hochbiegen dieses geschlitzten Abschnitts gebildet wird.

Ferner kann vorgesehen sein, dass sich ein am Basisteil vorgesehenes oder daran einstückig angeformtes Verstärkungselement zum Gelenkteil hin erstreckt. In umgekehrter Art und Weise ist gleichermaßen denkbar, dass sich ein am Gelenkteil vorgesehenes Verstärkungselement zum Basisteil hin erstreckt.

Bevorzugt ist nach der Erfindung ferner vorgesehen, dass das Verstärkungselement einstückig mit dem Basisteil oder mit dem Schwenkteil verbunden oder daran angeformt ist. Bei einer solchen Ausgestaltung kann eine separate Montage des Basiselements am Basisteil oder Gelenkteil in vorteilhafter Weise entfallen.

Nach einer Weiterbildung der Erfindung ist ferner vorgesehen, das Verstärkungselement in Form eines Durchzugs auszubilden, welcher zugleich den Rand der Durchgangsöffnung bildet. Der etwa nach Art einer Düse gebildete Durchzug kann beispielsweise zylindersymmetrisch ausgebildet sein und durch eine gleichmäßige Verformung eines im Gelenkbauteil gebildeten Öffnungsrands vorzugsweise senkrecht zur Ebene des Basisteils oder Gelenkteils ausgebildet werden.

Nach einer weiteren alternativen Ausgestaltung der Erfindung kann vorgesehen sein, das Verstärkungselement als Hülse auszubilden, welche kraft- oder stoffschlüssig in der Durchgangsöffnung von Basisteil oder Schwenkteil befestigt ist. Zum Einsetzen der Hülse in die Durchgangsöffnung weist diese vorzugsweise einen mit einer Fase versehenen Hülsenrand auf, welcher das Einführen der Hülse in die Durchgangsöffnung erleichtert. Die Hülse kann innen hohl und zur Aufnahme des im Spritzvorgang noch flüssigen Materials ausgebildet sein. Andere Geometrien, bei welchem das Verstärkungselement als massiver Stift oder Zapfen ausgebildet ist, sind jedoch ebenfalls im Sinne der Erfindung.

Bei einer Anordnung des Verstärkungselements an einem Seitenrand von Basisteil oder Schwenkteil kann die Verstärkungslasche nahezu beliebig und unabhängig von der Größe und Geometrie der Durchgangsöffnung ausgebildet werden, da hier zur Bildung der Lasche lediglich ein Umformen eines vorzugsweise senkrecht zur Umformachse beidseitig geschlitzten Flächenabschnitts vorzusehen ist.

Nach einer weiteren Ausführungsform weist eines der beiden Drehgelenkbauteile, Basisteil oder Schwenkteil, eine Durchgangsöffnung zur Aufnahme des mittels Spritzguss gefertigten Gelenkbolzens auf, während das andere Bauteil ein sich von der Ebene des Teils senkrecht oder schräg hierzu erstreckendes Verstärkungselement aufweist, welches in den Gelenkbolzen eingebettet ist und diesen verstärkt. Dabei kann das Verstärkungselement einstückig mit dem Basisteil oder dem Schwenkteil verbunden oder daran angeformt sein und optional eine zusätzliche Durchgangsöffnung aufweisen, in welche das zur Bildung des Bolzens vorgesehene Material, vorzugsweise ein Kunststoff beim Spritzgussvorgang eingespritzt wird.

So kann beispielsweise vorgesehen sein, dass lediglich das Schwenkteil eine Durchgangsöffnung für den gespritzten Bolzen aufweist, während das Basisteil lediglich ein vom Bolzen umspritztes Verstärkungselement aufweist. Das Verstärkungselement kann dabei als Stift, Zapfen oder Hülse kraft- oder stoffschlüssig am Basisteil befestigt sein.

Unabhängig von der Ausgestaltung des Basisteils ist nach einer weiteren vorteilhaften Ausgestaltung der Erfindung vorgesehen, dass mehrere Schwenkteile mit jeweils einem Gelenkbolzen schwenkbar an einem gemeinsamen Basisteil gelagert sind.

Des Weiteren kann nach einer Weiterbildung der Erfindung vorgesehen werden, am Schwenkteil eine weitere Durchgangsöffnung oder ein weiteres Verstärkungselement zur Aufnahme eines weiteren Gelenkbolzens auszubilden. Insoweit ist die Erfindung nicht auf ein einfaches Drehgelenk beschränkt, sondern kann universell für eine Vielzahl mehrkomponentiger und mehrgliedriger Drehgelenksysteme, etwa ein Viergelenk oder beliebige andere Vielgelenkanordnungen angewendet werden. Weitere Anwendungsgebiete sind beispielsweise Kurbelschwingen, Doppelkurbeln oder Doppelschwingen.

Des Weiteren ist nach einer bevorzugten Ausgestaltung der Erfindung vorgesehen, dass das Basisteil und das Schwenkteil als Komponenten eines zumindest zwei Kraftfahrzeugbauteile schwenkbar miteinander verbindenden Gelenks ausgebildet sind. Basisteil und Schwenkteil der Drehgelenkanordnung können beispielsweise als Komponenten eines Cabriolet-Verdecks bzw. eines entsprechenden Verdeckgestänges ausgebildet sein.

Nach einer weiteren bevorzugten Ausgestaltung der Erfindung ist vorgesehen, dass der Gelenkbolzen unter Bildung eines am Schwenk- oder Basisteil angrenzenden axialen Spalts an das Basisteil und/oder an das Schwenkteil angespritzt ist. Das Vorsehen eines solchen Spalts erfolgt insbesondere vor dem Hintergrund, dass das zur Bildung des Gelenkbolzens vorgesehene Material nach erfolgtem Spritzgussvorgang einem unvermeidbaren Schrumpfungs- oder Schwindungsprozess unterliegen kann. Bezogen auf die Drehgelenkachse kann sich ein solcher Schrumpfungsprozess vorteilhaft auf die Leichtgängigkeit der Drehgelenkanordnung auswirken.

In Axialrichtung, also parallel zum Verlauf der Drehgelenkachse kann ein Schrumpfen des Materials jedoch unter Umständen zur Bildung axialer Spannungen führen unter der das Basisteil, das Gelenkteil sowie ein gegebenenfalls dazwischenliegendes Distanzstück in Axialrichtung zusammengezogen werden. Eine solche schrumpfungsbedingte Zugwirkung kann sich dabei als nachteilig für die Beweglichkeit von Schwenkteil und Basisteil erweisen. Indem nun zwischen einem Distanzstück des Bolzens und einer angrenzenden Gelenkkomponente, Basisteil oder Schwenkteil, ein axialer Spalt geschaffen wird, kann den für die Beweglichkeit des Drehgelenks negativen Auswirkungen einer Materialschrumpfung effektiv entgegengewirkt werden.

Die Drehgelenkkomponenten und der sie verbindende Gelenkbolzen werden folglich bereits bei der Herstellung mit einem vorbestimmten axialen Spiel versehen, welches durch einen alterungsbedingten Schrumpfungs- oder Schwindungsprozess des Bolzens minimiert wird. Zur Erzeugung des Spalts kann dabei beispielsweise das Einführen eines dem Spaltmaß entsprechenden Schiebers in die Spritzgussform vorgesehen werden.

Nach einer weitere Ausführungsform der Erfindung ist vorgesehen, dass die Durchgangsöffnung von Basisteil und/oder Schwenkteil außenseitig eine Fase aufweist. Beispielsweise weist die am Basisteil ausgebildete Durchgangsöffnung an ihrer dem Schwenkteil abgewandten Seite eine Fase auf. Gleichermaßen oder alternativ kann eine solche außen liegende Fase am Schwenkteil vorgesehen sein.

Mittels einer solchen Schrägfläche oder Fase kann erreicht werden, dass ein Schrumpfungsprozess des gespritzten Gelenkbolzens dem jeweiligen Fasenwinkel entsprechend eine geringere wechselseitige Reib- oder Klemmwirkung von Bolzen und Drehgelenkkomponente ermöglicht. Dadurch dass der Bolzen an die Durchgangsöffnung angespritzt ist, weist dieser typischerweise eine der Fase entsprechende Kontur auf, sodass ein womöglich in Radial- und Axialrichtung gleichermaßen stattfindendes Schrumpfen des Bolzens keine oder nur geringe Auswirkungen auf die Beweglichkeit der Drehgelenkanordnung hat.

Nach einer vorteilhaften Weiterbildung der Erfindung ist vorgesehen, das Verstärkungselement mit zumindest einer Durchgangsöffnung zu versehen, die quer oder senkrecht zur Drehgelenkachse verläuft und die vom Material des Gelenkbolzens durchsetzt ist. Auf diese Art und Weise kann eine zusätzliche Verankerung und Befestigungsmöglichkeit für den Gelenkbolzen geschaffen werden, die durch die Ausrichtung und den Verlauf der Durchgangsöffnung insbesondere einem axialen Schrumpfen des gespritzten Materials entgegenwirkt.

Nach einem weiteren unabhängigen Aspekt betrifft die Erfindung ein Verfahren zur Herstellung der erfindungsgemäßen Drehgelenkanordnung. Hierbei werden das Basisteil und/oder das Schwenkteil in eine Spritzgussform eingelegt, sodass in einem nachfolgenden Spritzgussvorgang ein die beiden Teile schwenkbar miteinander verbindender Gelenkbolzen zumindest in eine an dem zumindest einen Gelenkbauteil vorgesehene Durchgangsöffnung eingespritzt wird. Der Gelenkbolzen wird zumindest an das Basisteil oder das Schwenkteil angespritzt, sodass mit der Bildung des Gelenkbolzens dieser zugleich am entsprechenden Gelenkbauteil unlösbar befestigt ist. Die Befestigung des Bolzens mit dem zweiten Gelenkbauteil kann entweder gleichermaßen in den Spritzgussprozess integriert werden. Sie kann aber auch nachträglich im Zuge eines weiteren Montageschritts erfolgen. Für letztere Variante ist es von Vorteil, wenn der Gelenkbolzen mit elastisch deformierbaren Rastelementen versehen ist, die etwa eine schwenkbare Clipsverbindung von Basisteil und Schwenkteil ermöglichen.

Nach einer Weiterbildung ist dabei insbesondere vorgesehen, dass das Basisteil und das Schwenkteil jeweils mit zumindest einer Durchgangsöffnung versehen werden, und dass beide Gelenkbauteile in der Spritzgussform mit den korrespondierenden Durchgangsöffnungen zumindest bereichsweise überlappend angeordnet werden, sodass der Gelenkbolzen mittels des Spritzgussvorgangs sowohl an das Basisteil als auch an das Schwenkteil angespritzt werden kann.

Ferner ist vorgesehen, dass zur Bildung eines Verstärkungselements am Basisteil oder am Schwenkteil ein in die Durchgangsöffnung hineinragender Materialfortsatz schräg oder senkrecht zur Ebene des Basisteils oder des Schwenkteils umgeformt wird und im Spritzgussprozess von dem den Gelenkbolzen bildenden Material, bevorzugt von einem Kunststoff umspritzt wird.

Weitere Ziele, Merkmale sowie vorteilhafte Anwendungsmöglichkeiten der vorliegenden Erfindung ergeben sich aus der nachfolgenden Beschreibung von Ausführungsbeispielen anhand der Zeichnungen. Dabei bilden sämtliche beschriebenen als auch bildlich dargestellten Merkmale sowohl in Alleinstellung als auch in jeglicher sinnvollen Kombination untereinander den Gegenstand der vorliegenden Erfindung. Es zeigen:
- Fig. 1: in perspektivischer Darstellung eine erste Ausgestaltung einer erfindungsgemäßen Drehgelenkanordnung,
- Fig. 2: ein eine Durchgangsöffnung und eine Verstärkungslasche aufweisendes Basisteil im Querschnitt,
- Fig. 3: ein mittels Spritzguss an das Basisteil gemäß Fig. 2 und an ein Schwenkteil angespritzter Gelenkbolzen,
- Fig. 4: eine Querschnittsdarstellung eines weiteren Gelenks mit einem ein Rastelement aufweisenden Gelenkbolzen,
- Fig. 5: eine weitere Ausgestaltung des Gelenkbolzens gemäß Fig. 4 mit einem als Abstandshülse oder Abstandsscheibe ausgebildeten Abstandsstück,
- Fig. 6: eine schematische Querschnittsdarstellung eines als Durchzug ausgebildeten Verstärkungselements,
- Fig. 7: eine perspektivische Darstellung des Verstärkungselements gemäß Fig. 6,
- Fig. 8: eine Querschnittsdarstellung einer als Hülse in eine Durchgangsöffnung des Basisteils eingesetzte Verstärkungselements,
- Fig. 9: eine perspektivische Darstellung der Ausgestaltung gemäß Fig. 8,
- Fig. 10: eine vergrößerte Querschnittsdarstellung einer mit einem Schrumpfspalt versehenen Drehgelenkanordnung,
- Fig. 11: ein mit einer Fase versehenes Schwenkteil im Querschnitt und
- Fig. 12: einen vergrößerten Ausschnitt des Schwenkteils gemäß Figur 11.

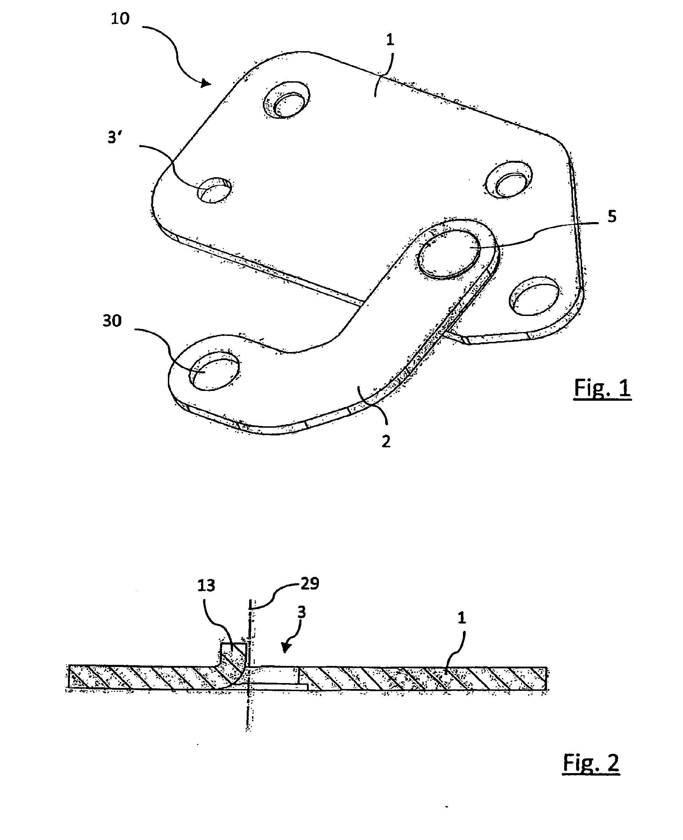

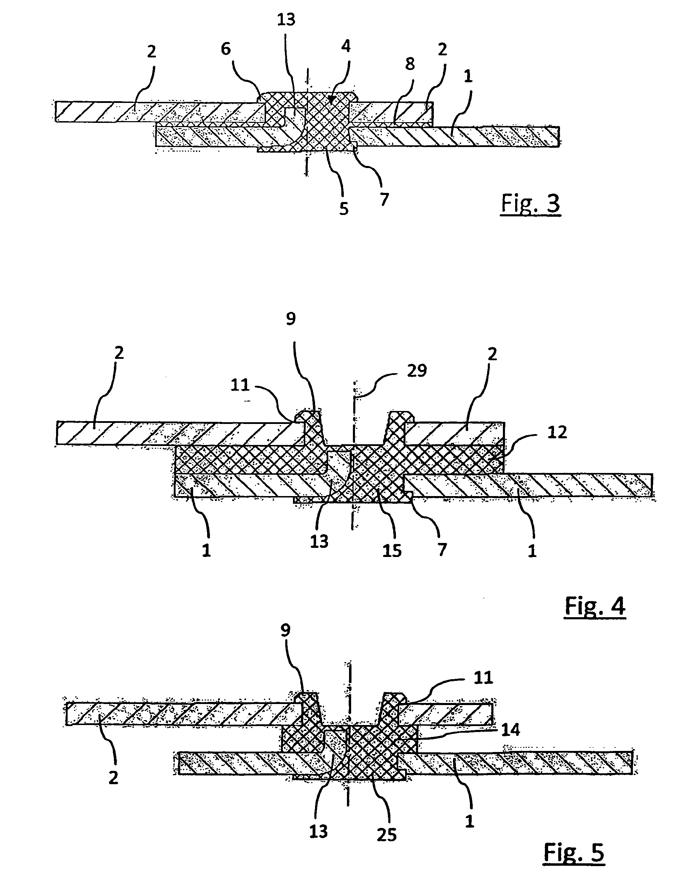

Fig. 1 zeigt eine Drehgelenkanordnung 10 mit einem Basisteil 1 und zwei schwenkbar am Basisteil 1 gelagerten Schwenkteilen 2. Die schwenkbare Lagerung erfolgt über jeweils einen Gelenkbolzen 5, der eines Spritzgussverfahrens an zumindest einem der Gelenkbauteile, Basisteil 1 oder Schwenkteil 2, unlösbar befestigt ist. Der Gelenkbolzen 5 kann dabei als Kunststoff -Spritzgussbauteil, prinzipiell aber auch als Metall-Spritzgussbauteil ausgebildet sein. Die Drehgelenkanordnung 10 ist in Fig. 3 im Querschnitt gezeigt. Der von Schwenkteil 2 und Basisteil 1 gebildete Zwischenraum kann dabei vollständig mit einem Kunststoff, vorzugsweise einem thermoplastischen Elastomer, insbesondere POM, ausgefüllt sein.

Das Basisteil 1 und das Schwenkteil 2 weisen hierbei zudem zumindest bereichsweise fluchtend oder überlappend zueinander zu liegen kommende Durchgangsöffnungen 3, 4 auf, welche vom gespritzten Gelenkbolzen 5 durchsetzt sind. Der Gelenkbolzen 5 weist eine in Fig. 3 in Vertikalrichtung liegende Axialerstreckung auf, die etwas größer ist als der vertikale Außenabstand von Basisteil 1 und Schwenkteil 2. In jenen axial zumindest geringfügig über die Außenseite von Basisteil 1 und Schwenkteil 2 hervorstehenden Abschnitten ist der Gelenkbolzen 5 radial verbreitert, um so eine in Axialrichtung wirkende formschlüssige Verbindung von Gelenkbolzen 5, Basisteil 1 und Schwenkteil 2 zur Verfügung zu stellen.

Der außerhalb der Durchgangsöffnungen 3, 4 liegende Bereich zwischen dem Basisteil 1 und dem Schwenkteil 2 wird beim Spritzgussprozess ebenfalls mit dem Spritzgussmaterial, vorzugsweise Kunststoff, ausgefüllt. In diesem Spalt wird somit im Zuge des Spritzgussprozesses ein einstückig mit dem Gelenkbolzen 5 verbundenes Distanzstück 8 gebildet, welches zugleich ein direktes Aneinanderreiben der beiden vorzugsweise aus Metall gefertigten Gelenkbauteile, Basisteil 1 und Schwenkteil 2, verhindert.

Des Weiteren ist angrenzend an die Durchgangsöffnung 3 des Basisteils 1 ein als Lasche ausgebildetes Verstärkungselement 13 vorgesehen, welches beim Spritzgussvorgang vollständig in den Gelenkbolzen eingebettet wird.

In der in Figur 1 gezeigten Ausgestaltung einer Drehgelenkanordnung 10 weist das Basisteil 1 eine weitere Durchgangsöffnung 3' auf, welche gleichermaßen wie die im Querschnitt in den Figuren 2 und 3 angedeutete Durchgangsöffnung 3 zur Aufnahme eines weiteren Bolzens vorgesehen werden kann. Im Unterschied zur Durchgangsöffnung 3 ist die Durchgangsöffnung 3' jedoch nicht mit einem Verstärkungselement 13 versehen. Daneben ist auch ein dem Basisteil 1 abgewandt zu liegen kommender Endabschnitt des Schwenkteils 2 mit einer Durchgangsöffnung 30, etwa zur Anbindung eines weiteren Drehgelenks, bzw. eines weiteren Gelenkbolzens versehen.

Die Ausgestaltungen gemäß der Figuren 4 und 5 unterscheiden sich von der Gelenkbolzengeometrie gemäß Fig. 3 darin, dass hier der Gelenkbolzen mit einem radial umlaufenden Rastelement oder mit einzelnen über den Umfang verteilt angeordneten Rastelementen 9 versehen ist, die bspw. ein nachträgliches Aufclipsen des Schwenkteils 2 ermöglichen. So ist bei diesen Ausgestaltungen nicht zwingend erforderlich, die beiden Gelenkbauteile Basisteil 1 und Schwenkteil 2 bereits im Spritzgussvorgang miteinander schwenkbar zu verbinden, sondern es kann vorgesehen werden, zunächst lediglich den Gelenkbolzen 15, 25 in die Durchgangsöffnung 3 des Basisteils 1 einzuspritzen und durch entsprechende Ausgestaltung des Spritzgusswerkzeuges einen Gelenkbolzen 15, 25 zu bilden, der dem Schwenkteil 2 zugewandt jene elastisch deformierbaren Rastelemente 9 aufweist.

Die als Rastnasen 9 im Querschnitt dargestellten Rastelemente weisen jeweils eine Hinterschneidung 11 auf, die in der in den Fig. 4 und 5 gezeigten Endmontagestellung an der dem Basisteil 1 abgewandten Seite des Schwenkteils 2 zur Anlage gelangt.

Insbesondere durch das Umspritzen des hochgestellten Verstärkungselements 13 ist der Gelenkbolzen 15, 25 am Basisteil 1 unlösbar fixiert. Eine Schwenkbewegung findet dann vornehmlich nur noch zwischen dem Bolzen 15, 25 und dem daran angelenkten Schwenkteil 2 statt.

Im Unterschied zur Ausgestaltung gemäß Fig. 3 weist der in Fig. 4 gezeigte Gelenkbolzen 15 ein in Axialrichtung vergrößertes Distanzstück 12 auf. Je nach Anforderungsprofil kann der axiale Abstand von Schwenkteil 2 und Basisteil 1 durch eine entsprechend dicke oder dünne Ausgestaltung des Distanzstücks 12 gezielt eingestellt werden. In den Ausführungsbeispielen gemäß der Fig. 3 und 4 ist nahezu der gesamte Überlappungsbereich von Basisteil 1 und Schwenkteil 2 vom Distanzstück 8, 12 ausgefüllt. Bei einer solchen Ausgestaltung ergibt sich eine verhältnismäßig große Anlagefläche von Basisteil 1 und Schwenkteil 2 zum Distanzstück 8, 12, sodass einem Verkippen von Basisteil 1 und Schwenkteil 2 gegenüber der vertikalen Schwenkachse 29 mit einfachen Mitteln entgegengewirkt werden kann.

Fig. 5 zeigt eine weitere Ausgestaltung des Gelenkbolzens 25. Bei diesem weist das Distanzstück 14 im Unterschied zur Ausgestaltung gemäß Fig. 4 eine geringere radiale Erstreckung auf. Das Distanzstück 14 ist hierbei vornehmlich als Distanzhülse ausgebildet.

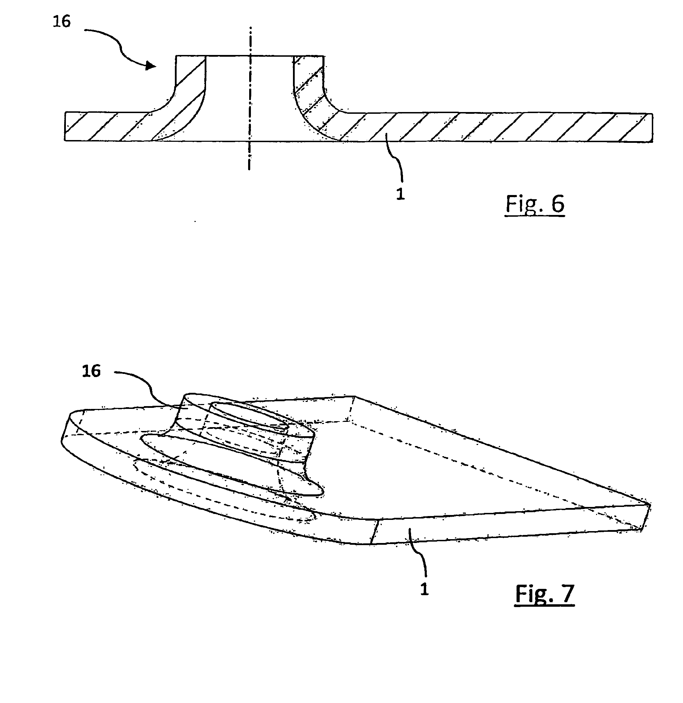

Die Fig. 6 und 7 zeigen eine weitere Ausgestaltung eines als Düse oder Durchzugs ausgebildeten Verstärkungselements 16. Hierbei ist der umlaufende Rand der Durchgangsöffnung nahezu senkrecht nach oben gebogen, sodass ein zylindersymmetrisches Verstärkungselement für den eigentlichen Spritzguss-Gelenkbolzen zur Verfügung gestellt wird.

Die Höhe jenes durch Materialumformung gebildeten Durchzugs ist hierbei durch den Durchmesser der Durchgangsöffnung bestimmt. Andere, in den Figuren nicht explizit gezeigten Ausgestaltungen sehen beispielsweise eine laschenartige Umformung im Randbereich von Basisteil 1 oder Schwenkteil 2 vor. Hierbei können durch entsprechenden Zuschnitt des plattenartigen Ausgangswerkstücks für das Basisteil oder das Schwenkteil nahezu beliebige Längserstreckungen für eine winklige Lasche zur Verfügung gestellt werden.

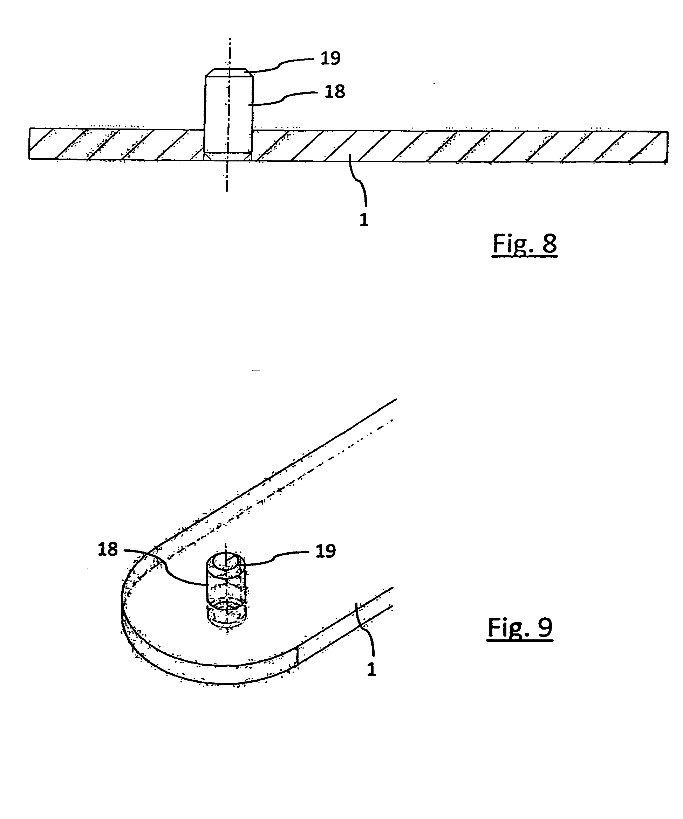

Die Fig. 8 und 9 zeigen ferner eine alternative Ausgestaltung eines Verstärkungselements 18, welches als Hülse oder als Stift ausgebildet ist und als separates Bauteil in eine Durchgangsöffnung des Basisteils 1 einsetzbar ist. Zur Montageerleichterung weist jener Zapfen oder Stift 18 eine Fase 19 an seinen freien Endabschnitten auf, wie dies anhand Fig. 8 ersichtlich ist. Die Hülse, der Zapfen oder der Stift 18 können innen hohl oder als vollmaterialartig ausgebildet sein. Bei einer hohlen Ausgestaltung kann es sich als vorteilhaft erweisen, dass der an das Verstärkungselement 18 anzuspritzende Gelenkbolzen aufgrund der Durchdringung des Hohlkörpers eine bessere Befestigung am Basisteil 1 erfährt.

Von Vorteil weisen sämtliche Verstärkungselemente 13, 16, 18 in der Ebene parallel zur Ebene des Basisteils 1 eine geringere Erstreckung als der Innendurchmesser der am Schwenkteil vorgesehenen Durchgangsöffnung 4 auf. Auf diese Art und Weise wird sicher gestellt, dass das Verstärkungselement die Durchgangsöffnung nur bereichsweise ausfüllt, sodass innerhalb der Durchgangsöffnung 4 stets ein ausreichend großes Volumen zur Aufnahme des gespritzten Gelenkbolzens verbleibt.

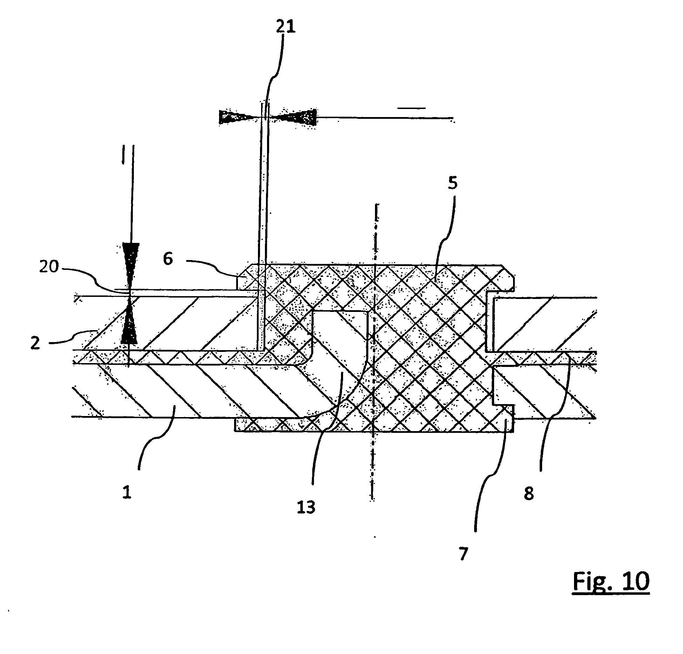

In den Ausgestaltungen gemäß der Figuren 10 bis 12, sind diverse Möglichkeiten aufgezeigt, um einer etwaigen, durch Schrumpfen des Bolzenmaterials bedingten Schwergängigkeit der Drehgelenkanordnung vorzubeugen oder entgegenzuwirken.

Gemäß der Ausgestaltung nach Fig. 10 ist vorgesehen, den Bolzen 5 unter Bildung eines axialen Spalts 20 an das Schwenkteil 2 anzuspritzen. Der Spalt wird hierbei zwischen dem radial verbreiterten Kopf 6 des Bolzens 5 und der in Fig. 10 oben liegenden Seite des Schwenkteils 10 etwa durch Einfügen eines entsprechend ausgebildeten Schiebers im Spritzgussprozess gebildet. Ein nach dem Spitzgussvorgang stattfindendes axiales Schrumpfen des Bolzens 5 hat dann womöglich eine Verringerung des Spaltmaßes 20 zur Folge. Eine die Schwenkbarkeit negativ beeinflussende Klemmwirkung von Kopfteil 6 und Schwenkteil 2 tritt hierbei aber nicht unmittelbar auf. Das Gelenk bleibt folglich auch bei einer axialen Schrumpfung des angespritzten Bolzens beweglich.

Der radiale und den Bolzen 5 umgebende Spalt 21 kann gerade durch einen unvermeidbaren Schrumpfungsprozess gebildet werden. Ein radiales Schrumpfen des Bolzens 5 ist für die vorliegende Drehgelenkanordnung dabei durchaus erwünscht, wird auf diese Art und Weise doch ein wechselseitiges Ablösen von Bolzen 5 und Basisteil 1 erzielt, welches sich positiv auf die wechselseitige Schwenkbarkeit der Drehgelenkkomponenten 1, 2 auswirkt.

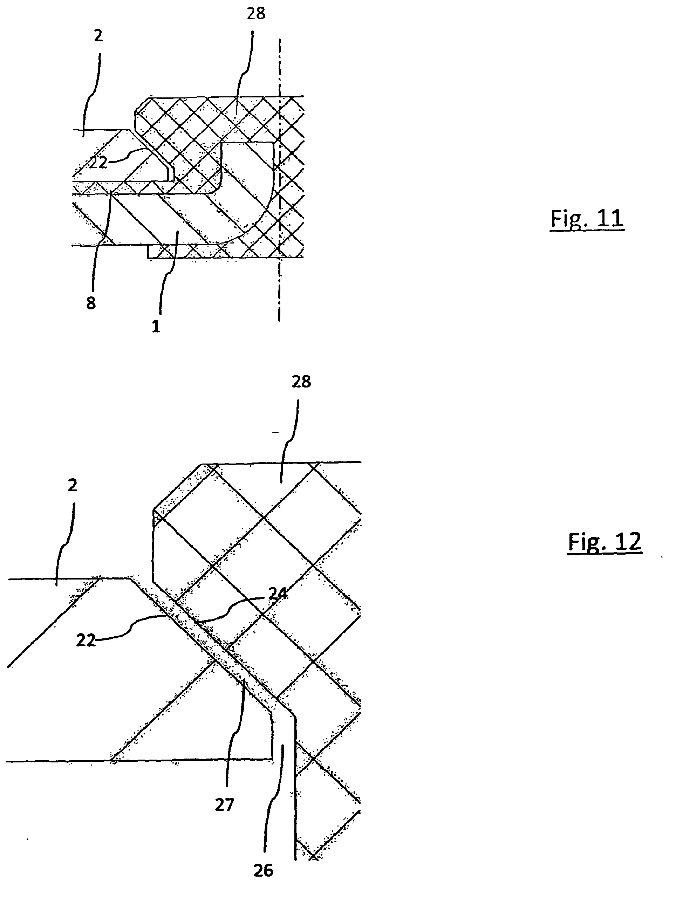

In den Figuren 11 und 12 ist ferner eine Ausgestaltung der Erfindung gezeigt, bei welcher die am Schwenkteil 2 vorgesehenen Durchgangsöffnung 4 einen zur Außenseite hin gefasten Rand 22 aufweist. Durch Ausbildung einer solchen Schrägen 22 ist es möglich, dass sich axiale und radiale Schrumpfungen des Bolzens 28 hinsichtlich der Beweglichkeit der Drehgelenkanordnung nahezu wechselseitig kompensieren. Der in einem unteren Abschnitt axial innen liegende Spalt 26 bildet sich auch hier durch ein radiales Schrumpfen des gespritzten Bolzens.

Durch Anspritzen des Bolzens 28 an die am Schwenkteil 2 vorgesehene angeschrägte Durchgangsöffnung erhält auch der Bolzen 28 einen entsprechenden schräg verlaufenden Fasenabschnitt 24. Bei einem Fasenwinkel von etwa 45° und einem annähernd gleichermaßen in Axial- und Radialrichtung auftretenden Schrumpfen wird der Bolzen 28 zwar axial nach unten gezogen. Durch den schrägen Verlauf und eine vergleichbare radiale Schrumpfung hat dies im Endeffekt jedoch keine wesentliche Veränderung eines schräg zwischen den korrespondieren Schrägflächen 22, 24, verlaufende Spalts 27 zur Folge.

In solchen Konfigurationen, in denen das Spaltmaß 27 äußerst gering oder ein Spalt überhaupt nicht vorhanden ist, hat der radiale und axiale Schrumpfungsprozess keinerlei oder für die Beweglichkeit der Drehgelenkanordnung nur unwesentlichen Auswirkungen.

Bei dieser Ausgestaltung der Erfindung kann insbesondere vorgesehen werden, den Fasenwinkel auf den Schrumpfungsprozess und das Schrumpfverhalten des an- oder eingespritzten Bolzens 28 abzustimmen. Je nach verwendetem Spritzgussmaterial und nach konkreter Ausgestaltung des Spitzgussprozesses kann sich durchaus ein anisotropes, d.h. in Axial- und Radialrichtung unterschiedliches Schrumpfverhalten einstellen. Mittels eines geeignet gewählten Fasenwinkels kann einem solch anisotropen Schrumpfen jedoch effizient begegnet werden.

### Bezugszeichenliste

- 1: Basisteil
- 2: Schwenkteil
- 3: Durchgangsöffnung
- 3': Durchgangsöffnung
- 4: Durchgangsöffnung
- 5: Gelenkbolzen
- 6: Verbreiterter Kopf
- 7: Verbreiterter Kopf
- 8: Distanzstück
- 9: Rastnase
- 10: Drehgelenk
- 11: Hinterschneidung
- 12: Distanzstück
- 13: Verstärkungselement
- 14: Distanzstück
- 15: Gelenkbolzen
- 16: Durchzug
- 18: Hülse
- 19: Fase
- 20: axialer Spalt
- 21: radialer Spalt
- 22: Fase
- 24: Schrägfläche
- 25: Gelenkbolzen
- 26: radialer Spalt
- 27: Spalt
- 28: Gelenkbolzen
- 29: Gelenkachse
- 30: Durchgangsöffnung

## Patentansprüche

1. Drehgelenkanordnung mit einem Basisteil (1) und einem Schwenkteil (2) die die zueinander schwenkbar gelagert sind, welche jeweils eine Durchgangsöffnung (3, 3', 4, 30) aufweisen, die zumindest bereichsweise zueinander überlappend angeordnet sind und wobei in den Durchgangsöffnungen (3, 3', 4, 30) ein mittels Spritzguss gefertigter Gelenkbolzen (5; 15; 25; 28) angeordnet ist, der mit dem Basisteil (1) oder dem Schwenkteil (2) fest verbunden ist und wobei der Gelenkbolzen (5; 15; 25; 28) an das Basisteil (1) und/oder an das Schwenkteil (2) angespritzt ist.

2. Drehgelenkanordnung nach Anspruch 1, wobei der Gelenkbolzen (5; 15; 25; 28) einen vom Rand der Durchgangsöffnung (3, 4, 30) von Basisteil (1) und/oder Schwenkteil (2) axial hervorstehenden und gegenüber der Durchgangsöffnung (3, 3', 4, 30) radial verbreiterten Kopf (6, 7) aufweist.

3. Drehgelenkanordnung nach einem der vorhergehenden Ansprüche, wobei ein zwischen dem Basisteil (1) und dem Schwenkteil (2) angeordnetes Distanzstück (8; 12; 14) einstückig mit dem Gelenkbolzen (5; 15; 25; 28) verbunden oder daran angeformt ist.

4. Drehgelenkanordnung nach einem der vorhergehenden Ansprüche, wobei der Gelenkbolzen(15; 25) an zumindest einem freien Endabschnitt ein elastisch deformierbares Rastelement (9), insbesondere einen Spreizdorn, eine Rastnase oder dergleichen mit zumindest einer Hinterschneidung (11) aufweist, mit welcher es an der Außenseite von Basisteil (1) und/oder Schwenkteil (2) zur Anlage gelangt.

5. Drehgelenkanordnung nach einem der vorhergehenden Ansprüche, wobei das Basisteil (1) und/oder das Gelenkteil (2) aus Metall gefertigt sind/ist und der Gelenkbolzen ein thermoplastisches Elastomer, insbesondere Polyoxymethylen (POM) aufweist.

6. Drehgelenkanordnung nach einem der vorhergehenden Ansprüche, wobei in den Gelenkbolzen (5; 15; 25) ein Verstärkungselement (13; 16; 18) eingebettet ist, welches sich schräg oder senkrecht zur Ebene des Basisteils (1) oder des Schwenkteils (2) erstreckt und am Basisteil (1) oder am Schwenkteil (2) befestigt ist.

7. Drehgelenkanordnung nach Anspruch 6, wobei das Verstärkungselement (13) als eine sich von einem Randabschnitt der Durchgangsöffnung (3, 4, 30) des Basisteils oder des Schwenkteils, oder als eine sich von einem Seitenrand von Basisteil (1) oder Schwenkteil (2) erstreckende Lasche (13) ausgebildet ist und wobei das Verstärkungselement (13, 16) einstückig mit dem Basisteil (1) oder mit dem Schwenkteil (2) verbunden oder daran angeformt ist.

8. Drehgelenkanordnung nach einem der vorhergehenden Ansprüche, wobei das Basisteil (1) und das Schwenkteil (2) als Komponenten eines zumindest zwei Kraftfahrzeugbauteile schwenkbar miteinander verbindenden Gelenks ausgebildet sind.

9. Drehgelenkanordnung nach einem der vorhergehenden Ansprüche, wobei der Gelenkbolzen (5; 15; 25; 28) unter Bildung eines am Schwenkteil (2) oder Basisteil (1) angrenzenden axialen Spalts (20) an das Basisteil (1) und/oder an das Schwenkteil (2) angespritzt ist.

10. Drehgelenkanordnung nach einem der vorhergehenden Ansprüche, wobei die Durchgangsöffnung (3, 3', 4, 30) von Basisteil (1) und/oder Schwenkteil (2) außenseitig eine Fase (22) aufweist.

11. Drehgelenkanordnung nach einem der vorhergehenden Ansprüche 6 bis 10, wobei das Verstärkungselement (13; 16; 18) eine quer oder senkrecht zur Drehgelenkachse (29) verlaufende Durchgangsöffnung aufweist, die vom Material des Gelenkbolzens (5; 15; 25; 28) durchsetzt ist.

12. Verfahren zur Herstellung einer Drehgelenkanordnung nach einem der vorhergehenden Ansprüche, wobei ein Basisteil (1) und ein Schwenkteil (2) in eine Spritzgussform eingelegt werden und in einem Spritzgussvorgang ein die beiden Teile (1, 2) schwenkbar miteinander verbindender Gelenkbolzen (5; 15; 25) zumindest in eine an den Teilen (1, 2) vorgesehene Durchgangsöffnung (3, 3', 4, 30) eingespritzt wird.

13. Verfahren nach Anspruch 12, wobei das Basisteil (1) und das Schwenkteil (2) jeweils mit zumindest einer Durchgangsöffnung (3, 3', 4, 30) versehen werden, in der Spritzgussform mit den korrespondierenden Durchgangsöffnungen (3, 3', 4, 30) zumindest bereichsweise überlappend angeordnet werden und der Gelenkbolzen (5; 15; 25; 28) mittels des Spritzgussvorgangs an das Basisteil (1) und/oder an das Schwenkteil (2) angespritzt wird.

14. Verfahren nach einem der vorhergehenden Ansprüche 12 oder 13, wobei vor dem Spitzgussprozess ein in die Durchgangsöffnung (3, 4, 30) hineinragender Materialfortsatz von Basisteil (1) oder Schwenkteil (2) zur Bildung eines Verstärkungselement (13; 16) schräg oder senkrecht zur Ebene des Basisteils (1) oder des Schwenkteil (2) umgeformt wird, der im Spritzgussprozess umspritzt wird.

## Claims

1. Rotary joint arrangement having a base part (1) and a pivoting part (2) which are arranged so as to be pivotable with respect to one another and which in each case have a through opening (3, 3', 4, 30), the said through openings (3, 3', 4, 30) being arranged so as to overlap one another at least in regions, and a joint pin (5; 15; 25; 28) which is manufactured by means of injection moulding being arranged in the through openings (3, 3', 4, 30), which joint pin (5; 15; 25; 28) is connected fixedly to the base part (1) or the pivoting part (2), and the joint pin (5; 15; 25; 28) being moulded onto the base part (1) and/or onto the pivoting part (2).

2. Rotary joint arrangement according to Claim 1, the joint pin (5; 15; 25; 28) having a head (6, 7) which projects axially from the edge of the through opening (3, 4, 30) of base part (1) and/or pivoting part (2) and is widened radially with respect to the through opening (3, 3', 4, 30).

3. Rotary joint arrangement according to one of the preceding claims, a spacer piece (8; 12; 14) which is arranged between the base part (1) and the pivoting part (2) being connected integrally to the joint pin (5; 15; 25; 28) or being moulded onto the latter.

4. Rotary joint arrangement according to one of the preceding claims, the joint pin (15; 25) having, on at least one free end section, an elastically deformable latching element (9), in particular an expanding mandrel, a latching lug or the like with at least one undercut (11), by way of which it comes into contact with an outer side of the base part (1) and/or pivoting part (2).

5. Rotary joint arrangement according to one of the preceding claims, the base part (1) and/or the joint part (2) being manufactured from metal, and the joint pin having a thermoplastic elastomer, in particular polyoxymethylene (POM).

6. Rotary joint arrangement according to one of the preceding claims, a reinforcing element (13; 16; 18) which extends obliquely or perpendicularly with respect to the plane of the base part (1) or the pivoting part (2) and is fastened to the base part (1) or to the pivoting part (2) being embedded into the joint pin (5; 15; 25).

7. Rotary joint arrangement according to Claim 6, the reinforcing element (13) being configured as a plate (13) which extends from an edge section of the through opening (3, 4, 30) of the base part or the pivoting part or as a plate (13) which extends from a side edge of the base part (1) or pivoting part (2), and the reinforcing element (13, 16) being connected integrally to the base part (1) or to the pivoting part (2) or being formed thereon.

8. Rotary joint arrangement according to one of the preceding claims, the base part (1) and the pivoting part (2) being configured as components of a joint which connects at least two motor-vehicle components to one another pivotably.

9. Rotary joint arrangement according to one of the preceding claims, the joint pin (5; 15; 25; 28) being moulded onto the base part (1) and/or onto the pivoting part (2) with the formation of an axial gap (20) which adjoins the pivoting part (2) or base part (1).

10. Rotary joint arrangement according to one of the preceding claims, the through opening (3, 3', 4, 30) of the base part (1) and/or pivoting part (2) having a bevel (22) on the outer side.

11. Rotary joint arrangement according to one of the preceding Claims 6 to 10, the reinforcing element (13; 16; 18) having a through opening which extends transversely or perpendicularly with respect to the rotary joint axis (29) and is penetrated by the material of the joint pin (5; 15; 25; 28).

12. Method for manufacturing a rotary joint arrangement according to one of the preceding claims, a base part (1) and a pivoting part (2) being inserted into an injection mould and, in an injection moulding operation, a joint pin (5; 15; 25) which connects the two parts (1, 2) to one another pivotably being injection-moulded at least into a through opening (3, 3', 4, 30) which is provided on the parts (1, 2).

13. Method according to Claim 12, the base part (1) and the pivoting part (2) being provided in each case with at least one through opening (3, 3', 4, 30), being arranged in the injection mould so as to overlap at least in regions with the corresponding through openings (3, 3', 4, 30), and the joint pin (5; 15; 25; 28) being moulded onto the base part (1) and/or onto the pivoting part (2) by means of the injection moulding operation.

14. Method according to either of the preceding Claims 12 and 13, a material projection of base part (1) or pivoting part (2) which protrudes into the through opening (3, 4, 30) being shaped, before the injection moulding process, obliquely or perpendicularly with respect to the plane of the base part (1) or of the pivoting part (2) in order to form a reinforcing element (13; 16), which material projection is encapsulated in the injection moulding process.

## Revendications

1. Agencement d'articulation rotative comprenant une partie de base (1) et une partie pivotante (2) qui sont montées de manière pivotante l'une par rapport à l'autre, qui présentent chacune une ouverture de passage (3, 3', 4, 30), lesquelles ouvertures de passage sont disposées de manière à se chevaucher au moins partiellement, et un boulon d'articulation (5 ; 15 ; 25 ; 28) fabriqué par moulage par injection étant disposé dans les ouvertures de passage (3, 3', 4, 30), lequel boulon d'articulation est connecté fixement à la partie de base (1) ou à la partie pivotante (2) et le boulon d'articulation (5 ; 15 ; 25 ; 28) étant surmoulé sur la partie de base (1) et/ou sur la partie pivotante (2).

2. Agencement d'articulation rotative selon la revendication 1, dans lequel le boulon d'articulation (5 ; 15 ; 25 ; 28) présente une tête (6, 7) saillant axialement depuis le bord de l'ouverture de passage (3, 4, 30) de la partie de base (1) et/ou de la partie pivotante (2) et radialement élargie par rapport à l'ouverture de passage (3, 3', 4, 30).

3. Agencement d'articulation rotative selon l'une quelconque des revendications précédentes, dans lequel une pièce d'espacement (8 ; 12 ; 14)
disposée entre la partie de base (1) et la partie pivotante (2) est connectée d'une seule pièce au boulon d'articulation (5 ; 15 ; 25 ; 28) ou est façonnée sur celui-ci.

4. Agencement d'articulation rotative selon l'une quelconque des revendications précédentes, dans lequel le boulon d'articulation (15 ; 25) présente, sur au moins une portion d'extrémité libre, un élément d'encliquetage (9) déformable élastiquement, notamment un goujon d'écartement, un nez d'encliquetage ou similaire, avec au moins une contre-dépouille (11), avec laquelle il vient en appui contre le côté extérieur de la partie de base (1) et/ou de la partie pivotante (2).

5. Agencement d'articulation rotative selon l'une quelconque des revendications précédentes, dans lequel la partie de base (1) et/ou la partie d'articulation (2) est/sont fabriquée(s) en métal et le boulon d'articulation présente un élastomère thermoplastique, notamment du polyoxyméthylène (POM).

6. Agencement d'articulation rotative selon l'une quelconque des revendications précédentes, dans lequel un élément de renforcement (13 ; 16 ; 18) est encastré dans le boulon d'articulation (5 ; 15 ; 25), lequel élément de renforcement s'étend obliquement ou perpendiculairement au plan de la partie de base (1) ou de la partie pivotante (2) et est fixé à la partie de base (1) ou à la partie pivotante (2).

7. Agencement d'articulation rotative selon la revendication 6, dans lequel l'élément de renforcement (13) est réalisé sous forme d'une patte s'étendant depuis une portion de bord de l'ouverture de passage (3, 4, 30) de la partie de
base ou de la partie pivotante, ou sous forme de patte (13) s'étendant depuis un bord latéral de la partie de base (1) ou de la partie pivotante (2) et l'élément de renforcement (13, 16) étant connecté d'une seule pièce à la partie de base (1) ou à la partie pivotante (2) ou étant façonné sur celle-ci.

8. Agencement d'articulation rotative selon l'une quelconque des revendications précédentes, dans lequel la partie de base (1) et la partie pivotante (2) sont réalisées sous forme de composants d'une articulation reliant de manière pivotante au moins deux composants de véhicule l'un à l'autre.

9. Agencement d'articulation rotative selon l'une quelconque des revendications précédentes, dans lequel le boulon d'articulation (5 ; 15 ; 25 ; 28) est moulé sur la partie de base (1) et/ou sur la partie pivotante (2) en formant une fente axiale (20) adjacente à la partie pivotante (2) ou à la partie de base (1).

10. Agencement d'articulation rotative selon l'une quelconque des revendications précédentes, dans lequel l'ouverture de passage (3, 3', 4, 30) de la partie de base (1) et/ou de la partie pivotante (2) présente un biseau (22) du côté extérieur.

11. Agencement d'articulation rotative selon l'une quelconque des revendications 6 à 10, dans lequel l'élément de renforcement (13 ; 16 ; 18) présente une ouverture de passage s'étendant transversalement ou perpendiculairement à l'axe de l'articulation rotative (29), laquelle est traversée par le matériau du boulon d'articulation (5 ; 15 ; 25 ; 28) .

12. Procédé de fabrication d'un agencement d'articulation rotative selon l'une quelconque des revendications précédentes, dans lequel une partie de base (1) et une partie pivotante (2) sont introduites dans un moule d'injection et, dans une opération de moulage par injection, un boulon d'articulation (5 ; 15 ; 25) reliant l'une à l'autre les deux pièces (1, 2) de manière pivotante est moulé par injection au moins dans une ouverture de passage (3, 3', 4, 30) prévue sur les pièces (1, 2).

13. Procédé selon la revendication 12, dans lequel la partie de base (1) et la partie pivotante (2) sont pourvues à chaque fois d'au moins une ouverture de passage (3, 3', 4, 30), sont disposées de manière à chevaucher au moins en partie, dans le moule d'injection, les ouvertures de passage correspondantes (3, 3', 4, 30), et le boulon d'articulation (5 ; 15 ; 25 ; 28) est moulé par injection au moyen de l'opération de moulage par injection sur la partie de base (1) et/ou sur la partie pivotante (2).

14. Procédé selon l'une quelconque des revendications précédentes 12 ou 13, dans lequel avant le processus de moulage par injection, une avancée de matière de la partie de base (1) ou de la partie pivotante (2), pénétrant dans l'ouverture de passage (3, 4, 30), est façonnée pour former un élément de renforcement (13 ; 16) obliquement ou perpendiculairement au plan de la partie de base (1) ou de la partie pivotante (2) et est surmoulée au cours du processus de moulage par injection.
